# EUROPEAN PATENT APPLICATION

(11) **EP 4 733 554 A1**
(43) Date of publication of application: **29.04.2026**
(21) Application number: 25210186.0
(22) Date of filing: 21.10.2025
(51) Int. Cl.: F01D 25/16

(54) **MULTIPLE LOADS PATHS FOR VIBRATION MITIGATION AND IMPROVED TIP CLEARANCE IN TURBOFAN ENGINE**

(30) Priority: 25.10.2024 US 202418927562
(71) Applicant: PRATT & WHITNEY CANADA CORP., Longueuil, Québec J4G 1A1 (CA)
(72) Inventor: MENHEERE, Dave, (01BE5) Longueuil, J4G 1A1 (CA); VAN DEN ENDE, Daniel, (01BE5) Longueuil, J4G 1A1 (CA)
(74) Representative: Dehns

(57) **Abstract**

A fan and low-pressure compressor assembly of a gas turbine engine includes a fan (42) operably connected to a first shaft (40) of the gas turbine engine, and a low-pressure compressor rotor (76) operably connected to the first shaft (40), the low-pressure compressor rotor (76) and the fan (42) sharing a common central longitudinal axis. A fan load path (88) of the fan (42) is separate from a low-pressure compressor rotor load path (116) of the low-pressure compressor rotor (76).

## Description

### BACKGROUND

Exemplary embodiments of the present disclosure pertain to the art of gas turbine engines, and in particular to fan and low-pressure compressor sections of gas turbine engines.

Gas turbine engines, especially those configured as turbofans, include a fan and a low-pressure compressor or boost compressor, coupled to the fan, and rotating on a common shaft with the fan. During operation, the fan may, for example, accumulate ice or be subjected to foreign object damage (FOD). These conditions may result in imbalance in the fan causing radial movement of the fan as it rotates about the engine axis. Since the low-pressure compressor rotors are coupled to the fan, at least some of this radial movement is experienced by the low-pressure compressor rotors. The fan and low-pressure compressor rotors typically share a common load path through low pressure compressor rotor support bearings and into the structural support case or intermediate case, and to an airframe engine mount.

This single shared load path results in increased rub of the low-pressure compressor rotor blade tips on the corresponding blade outer air seals (BOAS's). The increased tip clearances resulting from this increased rub diminishes gas turbine engine performance.

### BRIEF DESCRIPTION

In one aspect, there is provided a fan and low-pressure compressor assembly of a gas turbine engine that includes a fan operably connected to a first shaft of the gas turbine engine, and a low-pressure compressor rotor operably connected to the first shaft, the low-pressure compressor rotor and the fan sharing a common central longitudinal axis. A fan load path of the fan is separate from a low-pressure compressor rotor load path of the low-pressure compressor rotor.

Additionally or alternatively, in this or other examples, the fan load path is directed to an engine outer case via one or more bypass flow path stators of the gas turbine engine. The low-pressure compressor load path is directed to an airframe engine mount via an intermediate case of the engine. The intermediate case is positioned axially downstream of the engine outer case.

Additionally or alternatively, in this or other examples, a vibration isolator is positioned axially between the engine outer case and the intermediate case.

Additionally or alternatively, in this or other examples, a low-pressure compressor shaft is operably connected to the low-pressure compressor rotor. The low-pressure compressor shaft is concentric with and is operably connected to the first shaft.

Additionally or alternatively, in this or other examples, one or more low pressure compressor shaft bearings are supportive of the low-pressure compressor shaft.

Additionally or alternatively, in this or other examples, a fan bearing is supportive of the first shaft upstream of the one or more low pressure compressor shaft bearings.

Additionally or alternatively, in this or other examples, a fan bearing support is operably connected to the fan bearing and is operably connected to one or more bypass stators extending across a bypass flow path of the gas turbine engine.

Additionally or alternatively, in this or other examples, the fan bearing is positioned axially between the fan and the one or more low pressure compressor shaft bearings.

Additionally or alternatively, in this or other examples, a low-pressure compressor bearing support is operably connected to the one or more low pressure compressor shaft bearings and is operably connected to an intermediate case of the gas turbine engine.

Additionally or alternatively, in this or other examples, the low-pressure compressor shaft is operably connected to the first shaft via a spline connection.

In another aspect, which the Applicant expressly reserves the right to claim independently, there is provided a fan and low-pressure compressor assembly of a gas turbine engine that includes a fan operably connected to a first shaft of the gas turbine engine, a fan bearing to support the first shaft, a low-pressure compressor rotor, and
a low-pressure compressor shaft operably connected to the low-pressure compressor rotor. The low-pressure compressor shaft is concentric with and is operably connected to the first shaft. One or more low pressure compressor shaft bearings are supportive of the low-pressure compressor shaft. A fan load path is directed from the fan bearing to an engine outer case via one or more bypass flow path stators of the gas turbine engine, and a low-pressure compressor load path is directed from the one or more low compressor shaft bearings to an airframe engine mount via an intermediate case of the engine. The intermediate case is positioned axially downstream of the engine outer case.

In yet another aspect, a gas turbine engine includes a combustor, a turbine driven by operation of the combustor, and a fan and low-pressure compressor assembly operably connected to and driven by operation of the turbine. The fan and low-pressure compressor assembly includes a fan operably connected to a first shaft of the gas turbine engine, and a low-pressure compressor rotor operably connected to the first shaft. The low-pressure compressor rotor and the fan share a common central longitudinal axis. A fan load path of the fan is separate from a low-pressure compressor rotor load path of the low-pressure compressor rotor.

Additionally or alternatively, in this or other examples, the fan load path is directed to an engine outer case via one or more bypass flow path stators of the gas turbine engine. The low-pressure compressor load path is directed to an airframe engine mount via an intermediate case of the engine, the intermediate case is positioned axially downstream of the engine outer case.

Additionally or alternatively, in this or other examples, a vibration isolator is positioned axially between the engine outer case and the intermediate case.

Additionally or alternatively, in this or other examples, a low-pressure compressor shaft is operably connected to the low-pressure compressor rotor. The low-pressure compressor shaft is concentric with and is operably connected to the first shaft.

Additionally or alternatively, in this or other examples, one or more low pressure compressor shaft bearings are supportive of the low-pressure compressor shaft.

Additionally or alternatively, in this or other examples, a fan bearing is supportive of the first shaft upstream of the one or more low pressure compressor shaft bearings.

Additionally or alternatively, in this or other examples, a fan bearing support is operably connected to the fan bearing and is operably connected to one or more bypass stators extending across a bypass flow path of the gas turbine engine.

Additionally or alternatively, in this or other examples, the fan bearing is positioned axially between the fan and the one or more low pressure compressor shaft bearings.

Additionally or alternatively, in this or other examples, a low-pressure compressor bearing support is operably connected to the one or more low pressure compressor shaft bearings and is operably connected to an intermediate case of the gas turbine engine.

### BRIEF DESCRIPTION OF THE DRAWINGS

The following descriptions should not be considered limiting in any way. With reference to the accompanying drawings, like elements are numbered alike:
FIG. 1 is a partial cross-sectional view of a gas turbine engine;
FIG. 2 is a partial cross-sectional view of an embodiment of a fan and low-pressure compressor of a gas turbine engine; and
FIG. 3 is a partial cross-sectional view of an embodiment of a fan and low-pressure compressor of a gas turbine engine illustrating the load paths of the fan and low-pressure compressor.

### DETAILED DESCRIPTION

A detailed description of one or more embodiments of the disclosed apparatus and method are presented herein by way of exemplification and not limitation with reference to the Figures.

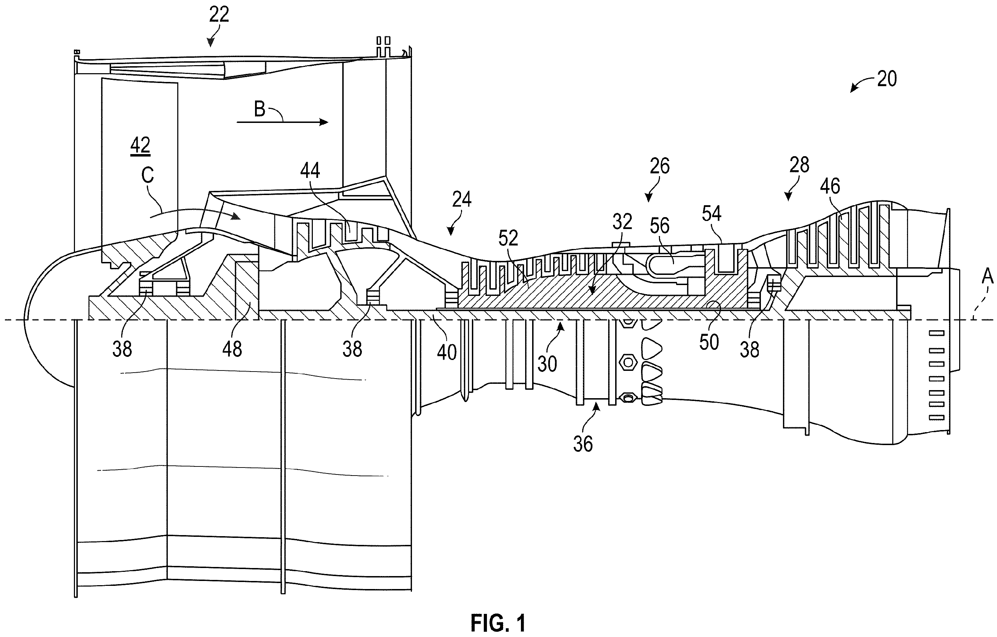

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low-speed spool 30 and a high-speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low-speed spool 30 generally includes an inner shaft 40 that interconnects a fan 42, a low-pressure compressor 44 and a low-pressure turbine 46. The inner shaft 40 may by connected to the fan 42 through a speed change mechanism, which in exemplary gas turbine engine 20 is illustrated as a geared architecture 48 to drive the fan 42 at a lower speed than the low-speed spool 30. The high-speed spool 32 includes an outer shaft 50 that interconnects a high-pressure compressor 52 and high-pressure turbine 54. A combustor 56 is arranged in exemplary gas turbine 20 between the high-pressure compressor 52 and the high-pressure turbine 54. An engine static structure 36 is arranged generally between the high-pressure turbine 54 and the low-pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low-pressure compressor 44 then the high-pressure compressor 52, mixed and burned with fuel in the combustor 56, then expanded over the high-pressure turbine 54 and low-pressure turbine 46. The turbines 46, 54 rotationally drive the respective low speed spool 30 and high-speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

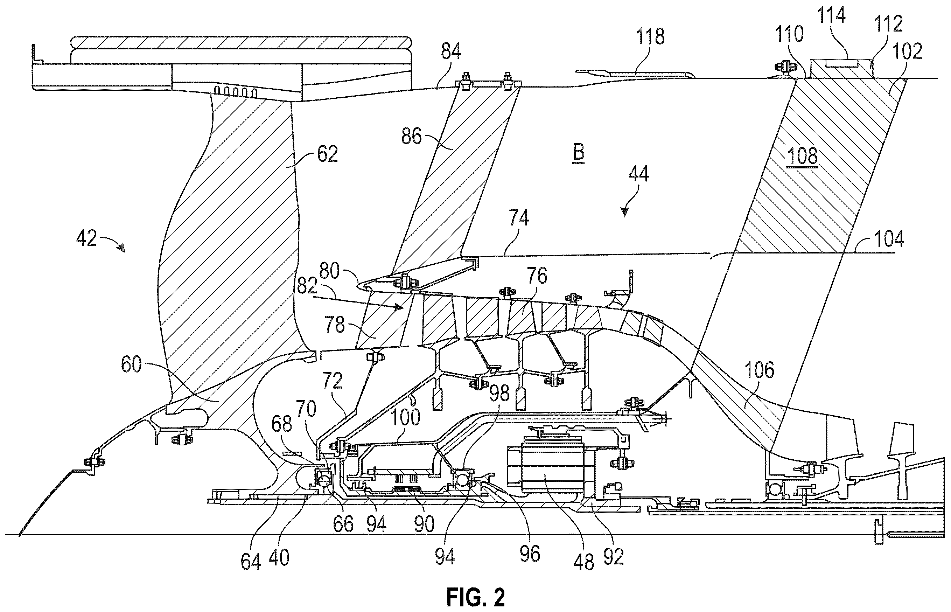

Referring now to FIG. 2, illustrated is a fan 42 and low-pressure compressor 44 of the gas turbine engine 20. The fan 42 includes a fan rotor hub 60 and a plurality of fan blades 62 extending radially outwardly from the fan rotor hub 60. The fan rotor hub 60 is operably connected to the inner shaft 40 by, for example, a fan spline 64. One skilled in the art will readily appreciate that the fan spline 64 connection to the inner shaft 40 is merely exemplary, and the fan rotor hub 60 may be connected to the inner shaft 40 by other means. Aft of the fan rotor hub 60, the inner shaft 40 is supported by a fan bearing 66, which in some embodiments includes one or more rolling elements 68 supported by a bearing race 70. The bearing race 70 is secured to a fan bearing support 72 that is in turn secured to a low-pressure compressor (LPC) case 74 that encloses an LPC rotor 76. In some embodiments, the bearing race 70 is secured to the fan bearing support 72. An LPC inlet guide vane 78 is positioned at an LPC case inlet 80 of the LPC case 74 to guide core airflow 82 along the core flowpath C into the LPC 44. The fan bearing support 72 is secured to the LPC inlet guide vane 78 by, in some embodiments, a bolted connection.

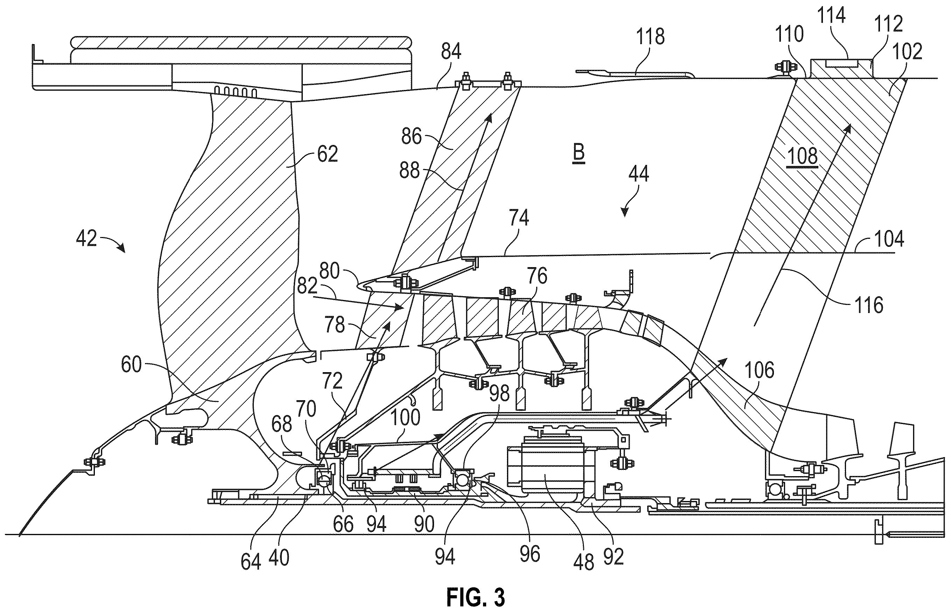

The gas turbine engine 20 additionally includes an engine outer case 84 surrounding the LPC case 74 and defining the bypass flowpath B therebetween. A bypass stator 86 extends across the bypass flowpath B connecting the LPC case 74 to the engine outer case 84, axially downstream of the fan 42. In some embodiments, bolted connections are utilized to secure the LPC inlet guide vane 78 to the bypass stator 86 at the LPC case 74, and to secure the bypass stator 86 to the engine outer case 84. This defines a fan rotor load path, identified as 88 in FIG. 3, to react loads from the fan 42 which may result from, for example, ice accumulation on the fan 42 and/or foreign object damage (FOD) impact on the fan 42, resulting in an imbalance in the fan 42 during rotation of the fan 42. Such loads acting on the fan bearing 66 are transmitted through the fan bearing support 72, the LPC inlet guide vane 78, the bypass stator 86 and into the engine outer case 84.

Referring again to FIG. 2, the low-pressure compressor (LPC) rotor 76 is secured to and rotates with an LPC shaft 90, which is operably connected to the inner shaft 40 by, for example, an LPC shaft spline 92. The LPC shaft 90 is supported by one or more LPC shaft bearings 94 located aft of the fan bearing 66 and radially outboard of the LPC shaft 90. The LPC shaft bearings 94 each include one or more bearing elements 96 located in a bearing race 98. In the embodiment illustrated in FIG. 2, two LPC shaft bearings 94 are utilized, though this is merely exemplary and other numbers of LPC shaft bearings 94 may be utilized in other embodiments. The LPC shaft 90 is not directly connected to the fan 42, but is linked to the fan 42 via connection of both to the inner shaft 40.

An LPC bearing support 100 extends aftward and is secured to an intermediate case 102 of the engine 20, which is positioned axially between the LPC case 74 and a high-pressure compressor case 104. The intermediate case 102 includes one or more inner vanes 106 that extend across the core flowpath C and one or more outer vanes 108 that extend across the bypass flowpath B. An outer case ring 110 of the intermediate case 102 is secured to the engine outer case 84 via, for example, a bolted connection, and further includes a mounting boss 112 to secure the engine 20 to an airframe 114 via the mounting boss 112. This structure defines an LPC rotor load path, identified as 116 in FIG. 3, which is separate and distinct from the fan rotor load path 88. The LPC load path 116 reacts loads from the LPC rotor 76 acting on the LPC shaft bearings 94 and transmits those loads through the LPC bearing support 100 and the intermediate case 102 and into the airframe 114 via the mounting boss 112 of the intermediate case 102. Additionally, in some embodiments, an isolator 118 is positioned between the engine outer case 84 and the intermediate case 102 to prevent or reduce transmission of fan 42 vibration to the intermediate case 102.

Isolating the fan rotor load path 88 from the LPC load path 116 allows for maintaining of LPC rotor 76 tip clearances in cases of vibration of the fan 42. This allows the engine 20 to maintain operational capability and thrust levels, and also reduces tolerance stackup in the assemblies, which allows the designed tip clearances in the fan 42 and in the LPC rotor 76 to be reduced.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A fan and low-pressure compressor assembly of a gas turbine engine (20), comprising:
a fan (42) operably connected to a first shaft (40) of the gas turbine engine (20); and
a low-pressure compressor rotor (76) operably connected to the first shaft (40), the low-pressure compressor rotor (76) and the fan (42) sharing a common central longitudinal axis (A);
wherein a fan load path (88) of the fan (42) is separate from a low-pressure compressor rotor load path (116) of the low-pressure compressor rotor (76).

2. The fan and low-pressure compressor assembly of claim 1, wherein:
the fan load path (88) is directed to an engine outer case (84) via one or more bypass flow path stators (86) of the gas turbine engine (20); and
the low-pressure compressor load path (116) is directed to an airframe engine mount (112, 114) via an intermediate case (102) of the engine, the intermediate case (102) disposed axially downstream of the engine outer case (84).

3. The fan and low-pressure compressor assembly of claim 2, further comprising a vibration isolator (118) disposed axially between the engine outer case (84) and the intermediate case (102).

4. The fan and low-pressure compressor assembly of any preceding claim, further comprising a low-pressure compressor shaft (90) operably connected to the low-pressure compressor rotor (76), the low-pressure compressor shaft (90) concentric with and operably connected to the first shaft (40).

5. The fan and low-pressure compressor assembly of claim 4, further comprising one or more low pressure compressor shaft bearings (94) supportive of the low-pressure compressor shaft (90).

6. The fan and low-pressure compressor assembly of claim 5, further comprising a fan bearing (66) supportive of the first shaft (40) upstream of the one or more low pressure compressor shaft bearings (94).

7. The fan and low-pressure compressor assembly of claim 6, further comprising a fan bearing support (72) operably connected to the fan bearing (66) and operably connected to one or more bypass stators (86) extending across a bypass flow path (B) of the gas turbine engine (20).

8. The fan and low-pressure compressor assembly of claim 6 or 7, wherein the fan bearing (66) is disposed axially between the fan (42) and the one or more low pressure compressor shaft bearings (94).

9. The fan and low pressor compressor assembly of any of claims 5 to 8, further comprising a low-pressure compressor bearing support (100) operably connected to the one or more low pressure compressor shaft bearings (94) and operably connected to an intermediate case (102) of the gas turbine engine (20).

10. The fan and low-pressure compressor assembly of any of claims 4 to 9, wherein the low-pressure compressor shaft (90) is operably connected to the first shaft (40) via a spline connection (92).

11. A gas turbine engine (20), comprising:
a combustor (56);
a turbine (46) driven by operation of the combustor (56); and
a fan and low-pressure compressor assembly operably connected to and driven by operation of the turbine (46), the fan and low-pressure compressor assembly being the fan and low-pressure compressor assembly of any preceding claim.
